# EUROPEAN PATENT APPLICATION

(11) **EP 3 643 486 A1**
(43) Date of publication of application: **29.04.2020**
(21) Application number: 18819581.2
(22) Date of filing: 22.05.2018
(51) Int. Cl.: B29D 30/06, B60C 15/04

(54) **PRODUCTION METHOD FOR PNEUMATIC TIRE, AND PNEUMATIC TIRE**

(30) Priority: 19.06.2017 JP 2017119975
(71) Applicant: Bridgestone Corporation, Tokyo 104-8340 (JP)
(72) Inventor: HASEGAWA Keiichi, Tokyo 104-8340 (JP); KATAYAMA Masahiro, Tokyo 104-8340 (JP)
(74) Representative: Oxley, Robin John George
(86) International application number: PCT/JP2018/019709
(87) International publication number: WO 2018/235500

(57) **Abstract**

A manufacturing method of a pneumatic tire includes a vulcanizing step of vulcanizing an unvulcanized tire in a vulcanization mold. A bead core 60 of the unvulcanized tire 1' includes a bead wire bundle 62 and a coating layer 65 comprising a resin material. In the vulcanizing step, a distance L1 in a tire radial direction between a tire radially inner side surface 651 of the coating layer of the bead core and a bead base molding surface 221 of the vulcanization mold is made uniform or gradually reduced in at least a part of a tire widthwise region toward the tire widthwise inside.

## Description

### TECHNICAL FIELD

The present disclosure relates to a manufacturing method of a pneumatic tire, and the pneumatic tire.

This application is based upon and claiming the benefit of priority from Japanese Patent Application No. 2017-119975, filed in Japan on June 19, 2017, the entire content of which is incorporated herein by reference.

### BACKGROUND

Conventionally, in the generally employed pneumatic tire, a distance in a tire radial direction between a tire radially inner side surface of the bead core and the bead base, consequently, a thickness of rubber in the tire radial direction between the tire radially inner side surface of the bead core and the bead base is gradually increased toward the tire widthwise inside (e.g., Patent Literature 1).

### CITATION LIST

### Patent Literature

PTL 1: Japanese Patent Laid-Open No. 10-95052

### SUMMARY

### (Technical Problem)

The pneumatic tire as described above may cause the risk of deteriorating the compression ratio of the rubber between the tire radially inner side surface of the bead core and the bead sheet of the rim, consequently, fitting force between the bead portion of the tire and the rim mainly at the tire widthwise inside in the state where the tire is installed to the rim. The fitting force or fittability between the bead portion of the tire and the rim is likely to influence the dynamic performance and water tightness of the tire. Accordingly, it is necessary to further improve the fitting force between the bead portion of the tire and the rim, consequently, the dynamic performance and water tightness of the tire.

The present disclosure has been developed to solve the above described problems, and it is an object of the disclosure to provide a manufacturing method of a pneumatic tire for obtaining the pneumatic tire that can improve the fitting force between the bead portion of the tire and the rim, and the pneumatic tire that can improve the fitting force between the bead portion of the tire and the rim.

### (Solution to Problem)

According to the present disclosure, there is provided a manufacturing method of a pneumatic tire including a vulcanizing step of vulcanizing an unvulcanized tire in a vulcanization mold. A bead core of the unvulcanized tire includes a bead wire bundle and a coating layer formed of a resin material for surrounding a circumference of the bead wire bundle when seen in a tire widthwise cross section. In the vulcanizing step, a distance in a tire radial direction between a tire radially inner side surface of the coating layer of the bead core, and a bead base molding surface of the vulcanization mold is made uniform or gradually reduced in at least a part of a tire widthwise region toward a tire widthwise inside.

It is assumed that the distance in the tire radial direction is measured along the direction vertical to the tire width direction in a tire widthwise cross section.

In the present description, the "rim" indicates an approved rim in an applicable size (Measuring Rim in STANDARDS MANUAL of ETRTO, and Design Rim in YEAR BOOK of TRA) described or to be described in future in an industrial standard effective in a district where the tire is produced and used, for example, JATMA YEAR BOOK of JATMA (the Japan Automobile Tyre Manufacturers Association) in Japan, STANDARDS MANUAL of ETRTO (the European Tyre and Rim Technical Organization) in Europe, YEAR BOOK of TRA (the Tire and Rim Association, Inc.) in U.S. or the like (that is, the above "rim" also includes a size that can be included in the above industrial standard in future, in addition to the existing size. Examples of "the size to be described in future" include sizes described as "FUTURE DEVELOPMENTS" in 2013 edition of STANDARDS MANUAL of ETRTO). However, it is considered that a rim having a size that is not described in the above industrial standard is a rim having a width corresponding to a bead width of the tire.

In the pneumatic tire according to the present disclosure, a bead core includes a bead wire bundle, and a coating layer formed of a resin material for surrounding a circumference of the bead wire bundle when see in a tire widthwise cross section. A distance in a tire radial direction between a tire radially inner side surface of the coating layer of the bead core and a bead base is made uniform or gradually reduced in at least a part of a tire widthwise region toward a tire widthwise inside.

It is assumed that the distance in the tire radial direction between the tire radially inner side surface of the coating layer of the bead core and the bead base is measured in the state where the tire is not installed to the rim.

It is assumed that the distance in the tire radial direction is measured along the direction vertical to the tire width direction in the tire widthwise cross section.

### (Advantageous Effect)

According to the present disclosure, there can be provided a manufacturing method of a pneumatic tire for obtaining the pneumatic tire that can improve the fitting force between the bead portion of the tire and the rim, and a pneumatic tire that can improve the fitting force between the bead portion of the tire and the rim.

### BRIEF DESCRIPTION OF THE DRAWINGS

In the accompanying drawings:
FIG. 1 is a view to explain a manufacturing method of a pneumatic tire according to an embodiment of the present disclosure, illustrating a state where an unvulcanized tire is accommodated in a vulcanization mold in a vulcanizing step in a tire widthwise cross section of a tire half portion;
FIG. 2A is an enlarged view of a main part of FIG. 1;
FIG. 2B is a tire widthwise cross-sectional view illustrating an enlarged main part of the pneumatic tire according to an embodiment of the present disclosure, which has been obtained from the vulcanizing step illustrated in FIG. 2A;
FIG. 3 is a tire widthwise cross-sectional view illustrating the tire half portion in a state where the pneumatic tire illustrated in FIG. 2B is installed to the rim;
FIG. 4A is a view to explain a manufacturing method of a pneumatic tire according to a first modification of the present disclosure, illustrating an enlarged main part in a state where the unvulcanized tire is accommodated in the vulcanization mold in the vulcanizing step in a tire widthwise cross section;
FIG. 4B is a tire widthwise cross-sectional view illustrating an enlarged main part of the pneumatic tire according to the first modification of the present disclosure, which has been obtained from the vulcanizing step illustrated in FIG. 4A;
FIG. 5A is a view to explain a manufacturing method of a pneumatic tire according to a second modification of the present disclosure, illustrating an enlarged main part in a state where the unvulcanized tire is accommodated in the vulcanization mold in the vulcanizing step in the tire widthwise cross section;
FIG. 5B is a tire widthwise cross-sectional view illustrating an enlarged main part of the pneumatic tire according to the second modification of the present disclosure, which has been obtained from the vulcanizing step illustrated in FIG. 5A;
FIG. 6A is a view to explain a manufacturing method of a pneumatic tire according to a third modification of the present disclosure, illustrating an enlarged main part in a state where the unvulcanized tire is accommodated in the vulcanization mold in the vulcanizing step in the tire widthwise cross section;
FIG. 6B is a tire widthwise cross-sectional view illustrating an enlarged main part of the pneumatic tire according to the third modification of the present disclosure, which has been obtained from the vulcanizing step illustrated in FIG. 6A;
FIG. 7A is a view to explain a manufacturing method of a bead core and a bead filler of FIG. 1, illustrating a state where an annular body is accommodated in an injection mold in an injection molding step, in an axial cross section of the annular body; and
FIG. 7B is a view illustrating the bead core and the bead filler that are obtainable in the injection molding step illustrated in FIG. 7A, in an axial cross section of the annular body.

### DETAILED DESCRIPTION

Hereinafter, embodiments of a manufacturing method of a pneumatic tire according to the present disclosure and the pneumatic tire will be illustrated and described with reference to the drawings.

The manufacturing method of the pneumatic tire according to the present disclosure and the pneumatic tire can be utilized in any type of pneumatic tire such as a passenger vehicle pneumatic tire.

The manufacturing method of the pneumatic tire according to the present embodiment includes a vulcanizing step of vulcanizing an unvulcanized tire 1' in a vulcanization mold 200. The unvulcanized tire 1' is manufactured in an unvulcanized tire manufacturing step prior to the vulcanizing step.

In the specification, the "unvulcanized tire" and the "pneumatic tire" may be referred to simply as the "tire".

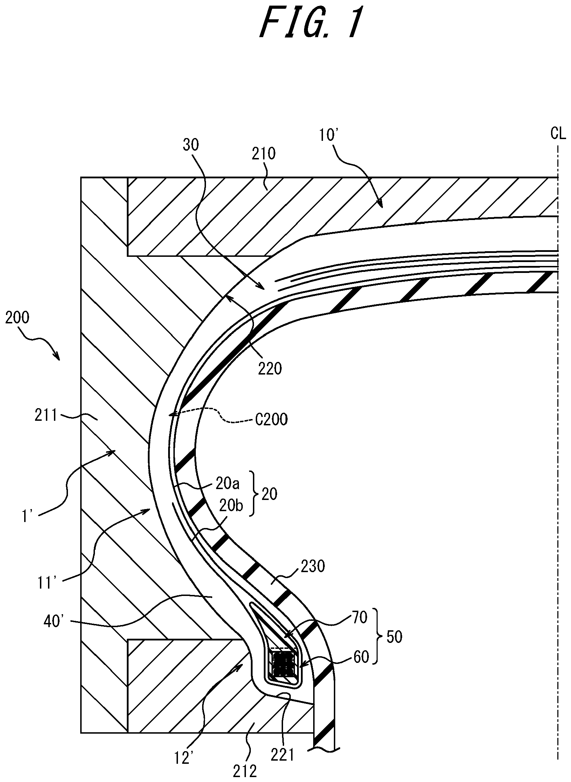

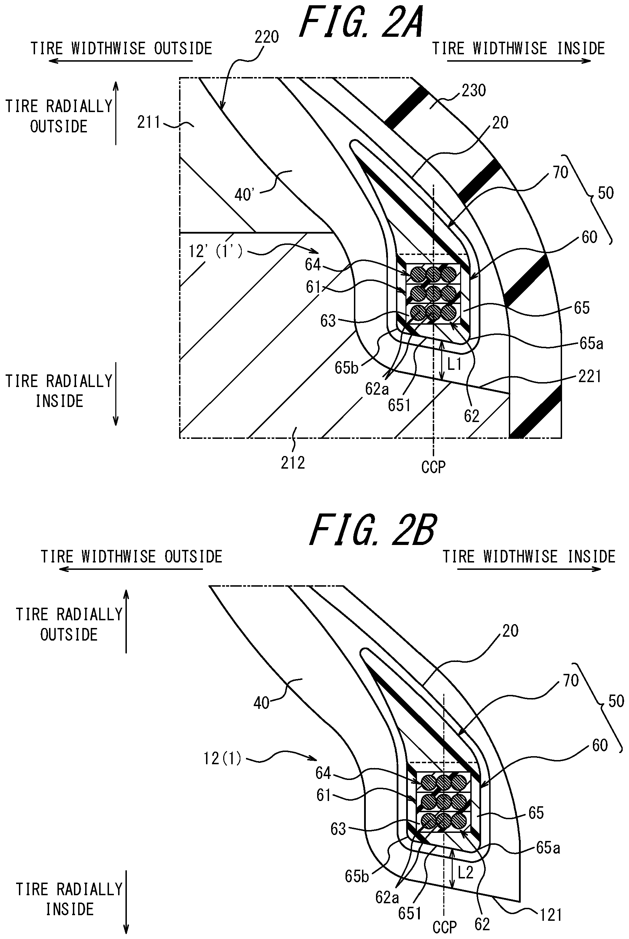

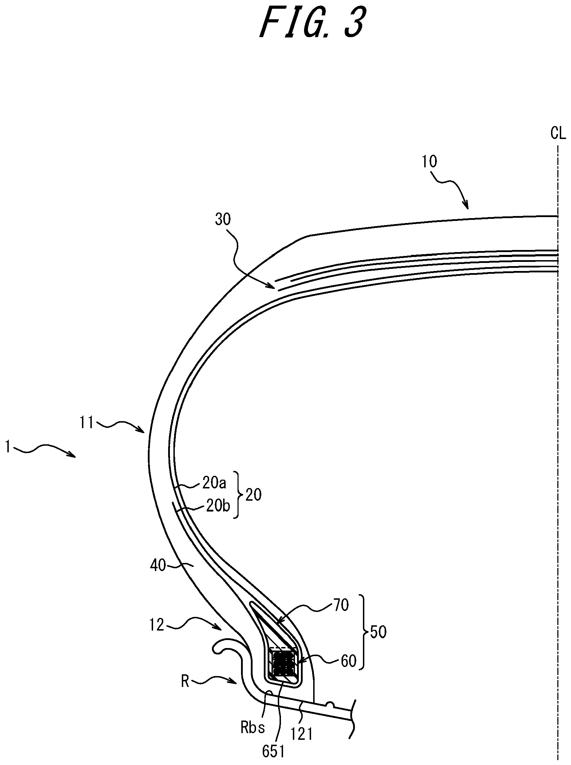

FIG. 1 to FIG. 3 are drawings to explain a manufacturing method of a pneumatic tire according to the present embodiment, and the pneumatic tire. FIG. 1 is a tire widthwise cross-sectional view of a tire half portion in the state where the unvulcanized tire 1' is accommodated in the vulcanization mold 200 in the vulcanizing step of the manufacturing method of the pneumatic tire according to the present embodiment. FIG. 2A is an enlarged view of a circumference of a bead portion 12' of the unvulcanized tire 1' illustrated in FIG. 1. FIG. 2B is a tire widthwise cross-sectional view of an enlarged circumference of a bead portion 12 of a pneumatic tire 1 according to the present embodiment, which has been obtained from the vulcanizing step illustrated in FIG. 1 and FIG. 2A. FIG. 3 is a tire widthwise cross-sectional view of the tire half portion in the state where the pneumatic tire 1 illustrated in FIG. 2B is installed to a rim R.

Each structure of the tires 1' and 1 may be formed either symmetrically or asymmetrically relative to a tire equatorial plane CL. Preferably, the tires 1' and 1 are structured while adapting to various forms to be described below at both sides relative to the tire equatorial plane CL.

The unvulcanized tire manufacturing step to be executed prior to the vulcanizing step includes a bead core manufacturing step of manufacturing a bead core 60, and an assembling molding step of assembling the bead core 60 manufactured in the bead core manufacturing step with any other tire forming member to obtain the unvulcanized tire 1' (FIG. 1).

In the bead core manufacturing step of the present example, the bead core 60 and a bead filler 70 are integrally molded to manufacture a core-and-filler member 50. In the bead core manufacturing step, the bead core 60 may only be manufactured. In this case, the bead filler 70 may be manufactured in an additional bead filler manufacturing step.

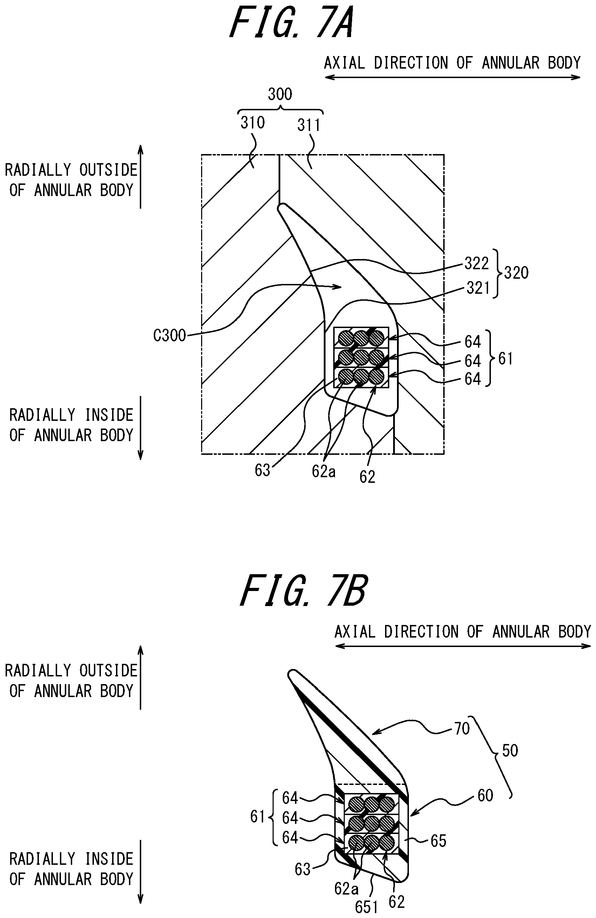

The bead core manufacturing step will be described in more detail referring to FIG. 7A and FIG. 7B.

In the assembling molding step, the bead core 60 manufactured in the bead core manufacturing step, an unvulcanized rubber 40', and any other tire forming member (in this example, a carcass ply 20, a belt 30 or the like) are assembled and molded on, for example, a molding drum (not illustrated) to obtain the unvulcanized tire 1'. In the assembling molding step of the present example, a tubular unvulcanized tire case (not illustrated) comprising some or all of the tire forming member is expanded by a bladder 230.

As illustrated in FIG. 1, the unvulcanized tire 1' obtainable by the assembling molding step comprises a tread portion 10', a pair of sidewall portions 11' extending inwardly from opposite tire widthwise ends of the tread portion 10' in the tire radial direction, and a pair of bead portions 12' extending continuously from the sidewall portions 11', respectively, and inwardly in the tire radial direction. The tread portion 10', the sidewall portions 11' and the bead portions 12' of the unvulcanized tire 1' form, after the vulcanizing step, the tread portion 10, the sidewall portions 11, and the bead portion 12 in the vulcanized tire 1 (FIG. 3).

Referring to an example of FIG. 1, the unvulcanized tire 1' includes the unvulcanized rubber 40', the bead core 60, the bead filler 70 positioned at a tire radially outside of the bead core 60, the carcass 20, and the belt 30.

In the bead portions 12' of the unvulcanized tire 1', the bead core 60 and the bead filler 70 are embedded in the unvulcanized rubber 40'. As described above, in the present example, the bead core 60 and the bead filler 70 form the integrally formed core-and-filler member 50. However, the bead core 60 may be separate from the bead filler 70.

In the example of FIG. 1, the carcass 20 including at least one carcass ply (one layer in the illustrated example) toroidally extends between a pair of bead cores 60 located on opposite sides of the tire equatorial plane CL. The carcass ply of the carcass 20 has, for example, a configuration where a cord made of steel, organic fibers or the like is coated with a rubber. In the illustrated example, the carcass 20 comprises a main body 20a toroidally extending between the pair of bead cores 60, and a pair of turn-up portions 20b each of which is turned up from an innermost end of the main body 20a in the tire radial direction toward an outer side around the bead core 60 in the tire width direction on each of the opposite sides of the tire equatorial plane CL. In the tread portion 10', the belt 30 comprising at least one belt layer (three layers in the illustrated example) is disposed on an outer side of a crown region of the carcass 20 in the tire radial direction.

However, the unvulcanized tire 1' used for the manufacturing method of the pneumatic tire according to the present embodiment is not limited to the example of FIG. 1, and a configuration of another portion may be optional as long as the tire comprises at least the bead filler 70 disposed in the bead portion 12', and the rubber 40.

As illustrated in FIG. 2A, in the present example, the bead cores 60 in the unvulcanized tire 1' includes a bead wire bundle 62, and a coating layer 65 surrounding a circumference of the bead wire bundle 62 and comprising the resin material, when seen in a tire widthwise cross section.

When seen in a tire widthwise cross section, the bead wire bundle 62 of the bead core 60 only indicates a configuration where a plurality of cross sections of the bead wires 62a that form the bead core 60 appear, and an actual number of the bead wires 62a that form the bead core 60 may be one or more. That is, the bead wire bundle 62 may be formed by winding one bead wire 62a a plurality of times in a tire circumferential direction, or by winding each of a plurality of bead wires 62a once or a plurality of times in the tire circumferential direction.

Any known material may be used in the bead wire 62a and, for example, a steel cord may be used. The steel cord may comprise, for example, a steel monofilament or a stranded wire. Alternatively, organic fibers, carbon fibers or the like may be used.

The coating layer 65 of the bead core 60 extends continuously along the tire circumferential direction, and at least a part of the coating layer in the tire circumferential direction is formed in an annular shape to surround an entire circumference of the bead wire bundle 62 of the bead core 60, when seen in a tire widthwise cross section. The part of the coating layer 65 in the tire circumferential direction does not have to be annular, and may be formed in, for example, a C-shape, when seen in the tire widthwise cross section.

In the present example, when seen in the tire widthwise cross section, each of the bead wires 62a is coated with a coating resin 63 comprising the resin material inside an annular shape formed by the coating layer 65. In other words, a clearance region between the coating layer 65 and each bead wire 62a is filled with the coating resin 63.

In the present example, the resin material that forms the coating resin 63 is different from the resin material that forms the coating layer 65. However, the resin material that forms the coating resin 63 may be the same as the resin material that forms the coating layer 65.

The present example is not restrictive. When seen in the tire widthwise cross section, each bead wire 62a may be coated with a coating rubber of a rubber in place of the coating resin 63 inside the annular shape formed by the coating layer 65. In other words, the clearance region between the coating layer 65 and each bead wire 62a may be filled with the coating rubber.

In the present example, the bead filler 70 positioned at the tire radially outside of the coating layer 65 of the bead core 60 comprises the resin material, and more specifically, integrally comprises the same resin material as the one for forming the coating layer 65. However, the resin material that forms the bead filler 70 may be different from the coating layer 65 of the bead core 60. Furthermore, the resin material that forms the bead filler 70 may vary with each portion of the bead filler 70. Alternatively, the bead filler 70 may comprise the rubber partially or entirely.

In the present description, "the resin material" that forms the coating layer 65, the coating resin 63, the bead filler 70 and others indicates a material different from the rubber (an organic polymer material that exhibits rubber elasticity at normal temperature). The "resin material" hardly softens (preferably not at all) even at high temperatures for use in a vulcanizing step and can almost (preferably completely) maintain the shape. Furthermore, at normal temperature, "the resin material" is much harder (e.g., as much as hundred times to several hundreds of times) than the rubber 40 that forms the tire 1, and is lighter than the rubber 40 that forms the tire 1.

Specifically, as "the resin material", for example, a thermoplastic elastomer or a thermoplastic resin can be used. Furthermore, a resin that crosslinks by heat or an electron beam or a resin that cures by thermal dislocation can be used, but in consideration of elasticity required during running, it is preferable to use the thermoplastic elastomer.

Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV).

Examples of the thermoplastic resin include polyurethane resin, polyolefin resin, vinyl chloride resin, and polyamide resin.

Furthermore, as "the resin material", for example, a resin material can be used in which a deflection temperature under load (under a load of 0.45 MPa) prescribed in ISO75-2 or ASTM D648 is 78°C or more, a tensile yield strength prescribed in JIS K7113 is 10 MPa or more, and a tensile rupture elongation (JIS K7113) similarly prescribed in JIS K7113 is 50% or more. The "resin material" has a tensile elastic modulus (prescribed in JIS K7113:1995) of preferably 50 MPa or more, also preferably 1000 MPa or less. It is preferable that "the resin material" has a softening point higher than a predetermined vulcanization temperature for use in the vulcanizing step.

In the vulcanizing step, the unvulcanized tire 1' obtained by the assembling molding step is vulcanized in the vulcanization mold 200.

As illustrated in FIG. 1, the vulcanization mold 200 has an inner surface that forms a tire outer surface molding surface 220 configured to mold an outer surface of the tire 1. More specifically, the vulcanization mold 200 comprises a plurality of vulcanization mold portions 210, 211, and 212, and each of inner surfaces of the respective vulcanization mold portions 210, 211, and 212 forms a part of the tire outer surface molding surface 220. In the illustrated example, the vulcanization mold 200 includes the tread vulcanization mold portion 210 configured to mold an outer surface of the tread portion 10 of the tire 1, the side vulcanization mold portion 211 configured to mold outer surfaces of parts of the sidewall portion 11 and the bead portion 12 of the tire 1, and the bead vulcanization mold portion 212 configured to mold an outer surface of the remaining portion of the bead portion 12 of the tire 1. However, the illustrated example is not restrictive, and the vulcanization mold 200 may comprise a plurality of optional vulcanization mold portions. In a state where the vulcanization mold portions 210, 211, and 212 are closed to one another, the tire outer surface molding surface 220 defines a cavity C200.

The tire outer surface molding surface 220 includes a bead base molding surface 221 for forming the bead base 121 of the tire 1 at the tire radially innermost side. In the illustrated example, the bead vulcanization mold portion 212 includes the bead base molding surface 221.

As FIG. 3 illustrates, the bead base 121 of the tire 1 forms a surface that faces the tire radially inside of the outer surface of the tire 1 at the tire radially innermost side. The bead base 121 of the tire 1 is a part in contact with a bead sheet Rbs of the rim R in the state where the tire 1 is installed to the rim R.

As illustrated in FIG. 1 and FIG. 2A, during the vulcanizing step, the unvulcanized tire 1' is disposed in the cavity C200 of the vulcanization mold 200, and vulcanized and molded at a predetermined temperature while being pressed against the tire outer surface molding surface 220 by the bladder 230 disposed on a tire lumen side of the unvulcanized tire 1'.

During the vulcanizing step, the tire forming members comprising the resin material (the coating layer 65 and the coating resin 63 of the bead core 60, and the bead filler 70 in the present example) are hardly (preferably not at all) deformed or moved, and shapes and positions are almost (preferably completely) maintained. On the other hand, during the vulcanizing step, the unvulcanized rubber 40' flows through the cavity C200, and is then vulcanized while molding the respective tire outer surfaces by the tire outer surface molding surface 220.

After the vulcanizing step, the vulcanized pneumatic tire 1 (FIG. 2B and FIG. 3) is obtainable.

As FIG. 2A illustrates, in the vulcanizing step of the manufacturing method of the pneumatic tire according to the present embodiment, a positional relationship between a tire radially inner side surface 651 of the bead core 60 and the bead base molding surface 221 is maintained so that a distance L1 in the tire radial direction (hereinafter referred to as a "first distance L1") between the tire radially inner side surface 651 of the coating layer 65 of the bead core 60 and the bead base molding surface 221 of the vulcanization mold 200 is made uniform or gradually reduced toward the tire widthwise inside in at least a part of the tire widthwise region.

As FIG. 2B illustrates, the pneumatic tire 1 obtained from the above-described vulcanizing step according to the present embodiment is configured to establish the positional relationship between the tire radially inner side surface 651 of the bead core 60 and the bead base 121 so that a distance L2 in the tire radial direction (hereinafter referred to as a "second distance L2") between the tire radially inner side surface 651 of the coating layer 65 of the bead core 60 and the bead base 121 is made uniform or gradually reduced toward the tire widthwise inside in at least a part of the tire widthwise region. The positional relationship between the tire radially inner side surface 651 of the bead core 60 and the bead base molding surface 221 in the vulcanizing step becomes substantially the same (preferably completely) as the positional relationship between the tire radially inner side surface 651 of the coating layer 65 and the bead base 121 of the tire 1 obtained from the vulcanizing step. As a result, the thickness of the rubber 40 in the tire radial direction between the tire radially inner side surface 651 of the coating layer 65 of the bead core 60 and the bead base 121 is made uniform or gradually reduced toward the tire widthwise inside in at least the part of the tire widthwise region.

In the state where the manufactured tire 1 is installed to the rim R (FIG. 3), the present embodiment may improve the compression ratio of the rubber 40 between the tire radially inner side surface 651 of the bead core 60 and the bead sheet Rbs of the rim R, consequently, the fitting force between the bead portion 12 of the tire 1 and the rim R to be higher than the conventional case mainly at the tire widthwise inside. This makes it possible to improve the fitting force as a whole. The fittability between the bead portion 12 of the tire 1 and the rim R may be enhanced as well as the dynamic performance and the water tightness of the tire.

In the present example, the coating layer 65 that surrounds the circumference of a bead wire bundle 62 of the bead core 60 comprises the resin material that is hardly softened in the vulcanizing step. Compared with a case where the bead core 60 does not comprise the resin material, and the bead wire bundle 62 is coated only with the rubber, the present example is capable of noticeably inhibiting the shape of the bead core 60 from changing in the vulcanizing step. This further makes it possible to maintain the positional relationship between the tire radially inner side surface 651 of the bead core 60 and the bead base molding surface 221 as intended. The manufactured tire 1 can also establish the positional relationship between the tire radially inner side surface 651 of the bead core 60 and the bead base 121 as intended.

According to the present example, the coating layer 65 that surrounds the circumference of the bead wire bundle 62 of the bead core 60 comprises the resin material that has much more hardness and is harder to deteriorate than the rubber. Unlike a case where the bead core 60 does not comprise the resin material, and the bead wire bundle 62 is covered only with the rubber, it can be noticeably inhibited that the shape of the bead core 60 is collapsed by pulling the carcass 20 outwardly in the tire radial direction through an operation of the bladder 230 during the manufacturing. This makes it possible to maintain the positional relationship between the tire radially inner side surface 651 of the bead core 60 and the bead base molding surface 221 as intended. Additionally, the collapse of the shape of the bead core 60 due to the use of the manufactured tire 1 over the long period of time can be noticeably inhibited. Consequently, also after the use for the long period of time, a fitting property of the bead portion 12 of the tire 1 to the rim R can be highly maintained, and a dynamic performance and water tightness of the tire can be satisfactorily maintained. Alternatively, the durability of the bead core 60 can be maintained equally to that of a conventional bead core, while miniaturization of the bead core 60 is possible.

In addition, according to the present example, a part of the bead core 60 comprises the resin material that is lighter than the rubber. Consequently, for example, unlike the case where the bead core 60 does not comprise the resin material and the bead wire bundle 62 is covered only with the rubber, the tire 1 can have the reduced weight, and can additionally have the reduced rolling resistance and the reduced fuel consumption.

Furthermore, according to the present example, each bead wire 62a is coated with the coating resin 63 inside the coating layer 65 of the bead core 60. Consequently, for example, unlike a case where each bead wire 62a is coated with the coating rubber inside the coating layer 65 of the bead core 60, the shape of the bead core 60 can be further securely maintained during the manufacturing or during the use. Durability of the bead core 60 can further improve, and the weight reduction and miniaturization of the tire 1 are further possible.

In the present example, the bead filler 70 also comprises the resin material. Compared with a case where the bead filler 70 comprises the rubber, the present example can further improve durability of the tire 1 as well as reduce the weight and the size thereof.

Referring to the example illustrated in FIG. 2A and FIG. 2B, each of corner portions 65a, 65b of the coating layer 65 at both tire widthwise sides at the tire radially inside has a rounded shape (curved shape) when seen in a tire widthwise cross section.

Preferably, as described above, at least one of the corner portions 65a, 65b of the coating layer 65 at both tire widthwise sides at the tire radially inside has the rounded or a chamfered shape in the tire widthwise cross section.

If the corner portions 65a, 65b do not have rounded or chamfered shapes, but angular shapes, the sharp pointed ends of the corner portions 65a, 65b may damage the tire forming members (carcass 20, rubber) around the corner portions 65a, 65b of the coating layer 65 at the tire radially inside when the carcass 20 is pulled outwardly in the tire radial direction by operation of the bladder 230 in manufacturing the tire, or when the load is applied to the tire 1 in use. By forming at least one of the corner portions 65a and 65b to have the rounded or chamfered shape, it is possible to effectively prevent the corner portions 65a, 65b from damaging the tire forming member around the corner portion 65a or 65b. This makes it possible to improve durability of the tire 1.

The corner portions 65a, 65b of the coating layer 65 at both tire widthwise sides at the tire radially inside may be formed to have angular shapes.

Assuming that at least one of the corner portions 65a and 65b at both tire widthwise sides at the tire radially inside has the rounded or chamfered shape when seen in the tire widthwise cross section, "the tire radially inner side surface 651 of the coating layer 65" in the specification does not include the rounded or chamfered corner portions 65a and 65b. In other words, each tire radially innermost end of the rounded or chamfered corner portions 65a, 65b is defined as the tire widthwise end of the "tire radially inner side surface 651 of the coating layer 65".

For example, referring to the example of FIG. 2A and FIG. 2B, the "tire radially inner side surface 651 of the coating layer 65" denotes the surface between the tire radially innermost ends of the rounded corner portions 65a, 65b at both tire widthwise sides.

Referring to the example of FIG. 2A, in the vulcanizing step, the tire radially inner side surface 651 of the coating layer 65 of the bead core 60 and the bead base molding surface 221 of the vulcanization mold 200 gradually extend inwardly in the tire radial direction toward the tire widthwise inside.

The tire 1 of the example illustrated in FIG. 2B obtained from the vulcanizing step has the tire radially inner side surface 651 of the coating layer 65 of the bead core 60, and the bead base 121 gradually extending inwardly in the tire radial direction toward the tire widthwise inside.

This makes it possible to further improve the fitting force between the bead portion 12 of the tire 1 and the rim R.

Besides the above described example, the tire radially inner side surface 651 of the coating layer 65 of the bead core 60, the bead base molding surface 221 of the vulcanization mold 200, and the bead base 121 of the tire 1 may extend in an arbitrary direction toward the tire widthwise inside.

Referring to the example of FIG. 2A, the tire radially inner side surface 651 of the coating layer 65 of the bead core 60 gradually extends inwardly in the tire radial direction toward the tire widthwise inside. In this case, if the corner portion 65a of the coating layer 65 at the inner sides in the tire width direction and the tire radial direction is not rounded nor chamfered, the top end of the corner portion 65a may be excessively sharpened. Accordingly, it is preferable to form at least the corner portion 65a of the coating layer 65 at the inner sides in the tire width direction and the tire radial direction to have the rounded or the chamfered shape.

This makes it possible to effectively prevent the corner portion 65a of the coating layer 65 from damaging the tire forming members around the corner portion 65a under the load applied to the tire, for example.

Referring to the example of FIG. 2A, in the vulcanizing step, the tire radially inner side surface 651 of the coating layer 65 and the bead base molding surface 221 of the vulcanization mold 200 linearly extend parallel to each other when seen in the tire widthwise cross section. The first distance L1 is made uniform over an entire tire widthwise region corresponding to the tire radially inner side surface 651 of the coating layer 65 toward the tire widthwise inside.

The tire 1 obtained from the vulcanizing step in the example of FIG. 2B has the tire radially inner side surface 651 of the coating layer 65 and the bead base 121 linearly extending parallel to each other when seen in the tire widthwise cross section. The second distance L2 is made uniform over the entire tire widthwise region corresponding to the tire radially inner side surface 651 of the coating layer 65 toward the tire widthwise inside. Accordingly, the thickness of the rubber 40 in the tire radial direction between the tire radially inner side surface 651 of the coating layer 65 of the bead core 60 and the bead base 121 is made uniform over the entire tire widthwise region corresponding to the tire radially inner side surface 651 of the coating layer 65 toward the tire widthwise inside.

Referring to the example of FIG. 2A and FIG. 2B, in the manufactured tire 1, the second distance L2 is made uniform over the entire tire widthwise region corresponding to the tire radially inner side surface 651 of the coating layer 65. This allows the fitting force between the bead portion 12 and the rim R to be substantially uniform along the tire width direction in the state where the tire 1 is installed to the rim R. This makes it possible to improve the fitting force between the bead portion 12 and the rim R.

Besides the above described example, the tire radially inner side surface 651 of the coating layer 65 of the bead core 60, the bead base molding surface 221 of the vulcanization mold 200, and the bead base 121 of the tire 1 may extend along an arbitrary non-linear shape when seen in the tire widthwise cross section. For example, they may extend along the curved shape, the wave-like shape, the bent shape with one or more bent portions or the like. Alternatively, each shape of the tire radially inner side surface 651 of the coating layer 65 of the bead core 60, the bead base molding surface 221, and the bead base 121 may be different from one another when seen in the tire widthwise cross section.

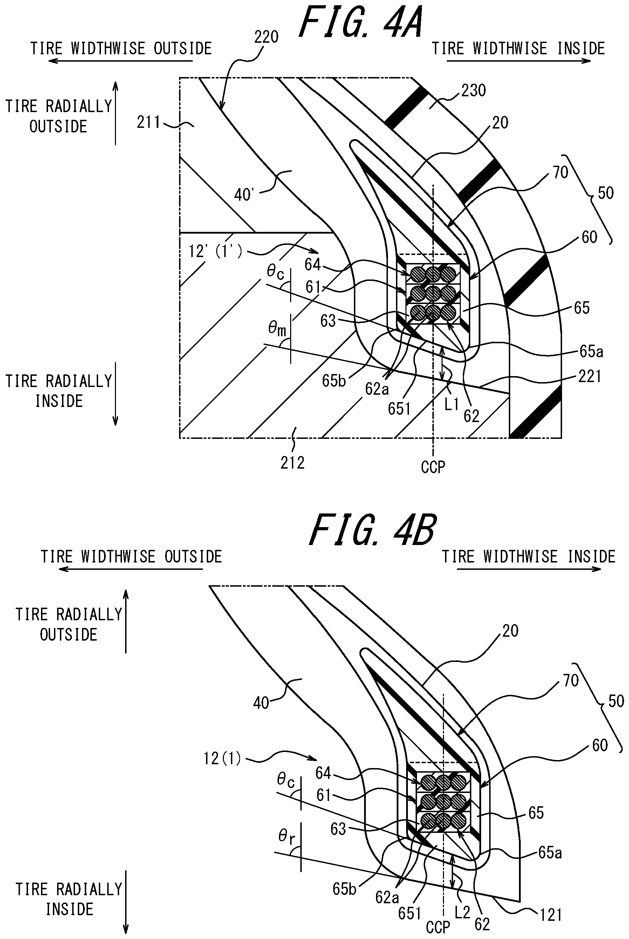

FIG. 4A and FIG. 4B illustrate a first modification of the present disclosure, corresponding to FIG. 2A and FIG. 2B, respectively.

Referring to the example of FIG. 4A, in the vulcanizing step, an inclination angle θc (θc ≤ 90°) of the tire radially inner side surface 651 of the coating layer 65 to the tire radial direction is smaller than an inclination angle θm (θm ≤ 90°) of the bead base molding surface 221 to the tire radial direction (θc ≤ θm) when seen in the tire widthwise cross section. The first distance L1 is gradually reduced over the entire tire widthwise region corresponding to the tire radially inner side surface 651 of the coating layer 65 toward the tire widthwise inside. The other structure is similar to that of the example illustrated in FIG. 2A.

In the case of the tire 1 of the example illustrated in FIG. 4B obtained from the vulcanizing step, the inclination angle θc of the tire radially inner side surface 651 of the coating layer 65 to the tire radial direction is smaller than an inclination angle θr (θr ≤ 90°) of the bead base 121 to the tire radial direction (θc ≤ θr) when seen in the tire widthwise cross section. The second distance L2 is gradually reduced over the entire tire widthwise region corresponding to the tire radially inner side surface 651 of the coating layer 65 toward the tire widthwise inside. Accordingly, the thickness of the rubber 40 in the tire radial direction between the tire radially inner side surface 651 of the coating layer 65 of the bead core 60 and the bead base 121 is gradually reduced over the entire tire widthwise region corresponding to the tire radially inner side surface 651 of the coating layer 65 toward the tire widthwise inside. The other structure is similar to that of the example illustrated in FIG. 2B.

Referring to the first modification of FIG. 4A and FIG. 4B, the manufactured tire 1 has the second distance L2 gradually reduced over the entire tire widthwise region corresponding to the tire radially inner side surface 651 of the coating layer 65 toward the tire widthwise inside. In the state where the tire 1 is installed to the rim R, the fitting force between the bead portion 12 and the rim R especially at the tire widthwise inside may be made higher than the fitting force at the tire widthwise outside. The resultant fitting force between the bead portion 12 and the rim R may further be improved.

In the illustrated example, especially, it is preferable to form at least the corner portion 65a of the coating layer 65 at the inner sides in the tire width direction and the tire radial direction to have the rounded or chamfered shape.

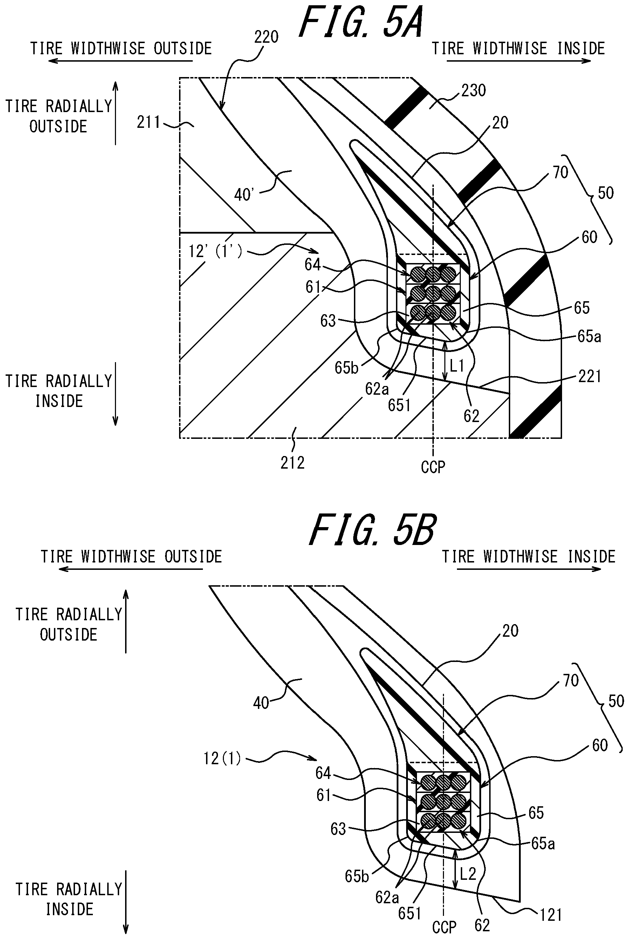

FIG. 5A and FIG. 5B illustrate a second modification of the present disclosure, corresponding to FIG. 2A and FIG. 2B, respectively.

Referring to FIG. 5A and FIG. 5B illustrating the second modification, likewise the example of FIG. 2A and FIG. 2B, the tire radially inner side surface 651 of the coating layer 65 of the bead core 60 gradually extends inwardly in the tire radial direction toward the tire widthwise inside. In this case, if the corner portion 65a of the coating layer 65 at the inner sides in the tire width direction and the tire radial direction does not have the rounded or chamfered shape, the top end of the corner portion 65a may be excessively sharpened. Accordingly, in the present example, the rounded shape (curved shape) of the corner portion 65a of the coating layer 65 at the inner sides in the tire width direction and the tire radial direction has the radius of curvature larger than that of the rounded shape of the corner portion 65b at the outer side in the tire width direction and at the inner side in the tire radial direction when seen in the tire widthwise cross section. The other structure is similar to that of the example illustrated in FIG. 2A and FIG. 2B. In the example of FIG. 2A and FIG. 2B, the radius of curvature of the rounded shape of the corner portion 65a of the coating layer 65 at the inner sides in the tire width direction and the tire radial direction is equal to or smaller than that of the rounded shape of the corner portion 65b at the outer side in the tire width direction and at the inner side in the tire radial direction when seen in the tire widthwise cross section.

The second modification of FIG. 5A and FIG. 5B is capable of preventing the corner portion 65a of the coating layer 65 from damaging the tire forming members around the corner portion 65a under the load applied to the tire more effectively than the example of FIG. 2A and FIG. 2B.

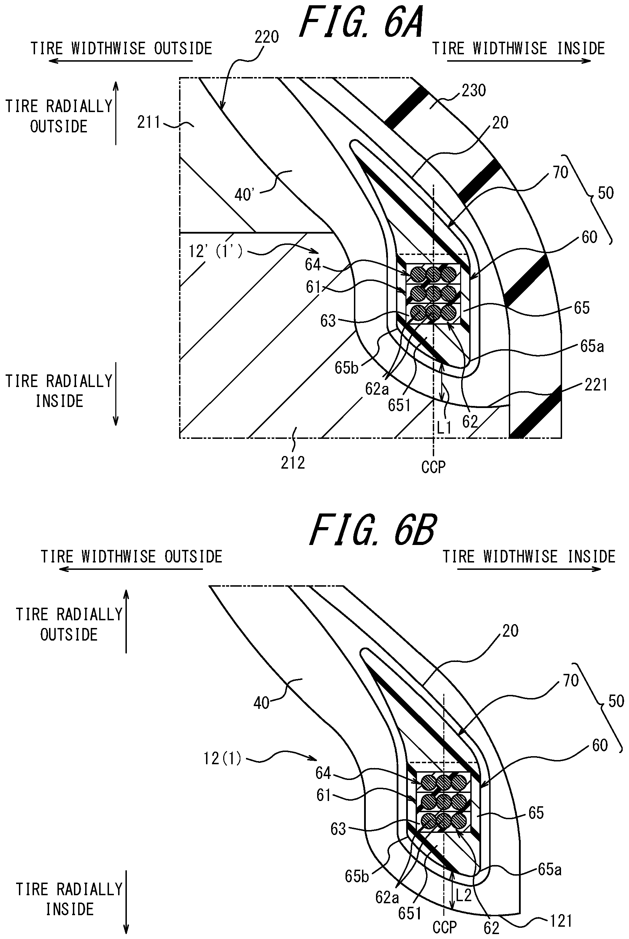

FIG. 6A and FIG. 6B illustrate a third modification of the present disclosure, corresponding to FIG. 2A and FIG. 2B, respectively.

Referring to FIG. 6A illustrating the third modification, in the vulcanizing step, the tire radially inner side surface 651 of the coating layer 65 and the bead base molding surface 221 of the vulcanization mold 200 extend along a convexly curved shape inwardly in the tire radial direction in the tire widthwise cross section. The first distance L1 is made uniform over the entire tire widthwise region corresponding to the tire radially inner side surface 651 of the coating layer 65 toward the tire widthwise inside.

The tire 1 as the example of FIG. 6B obtained from the vulcanizing step has the tire radially inner side surface 651 of the coating layer 65 and the bead base 121 extending along the convexly curved shape inwardly in the tire radial direction when seen in the tire widthwise cross section. The second distance 2L is made uniform over the entire widthwise region corresponding to the tire radially inner side surface 651 of the coating layer 65 toward the tire widthwise inside. Accordingly, the thickness of the rubber 40 in the tire radial direction between the tire radially inner side surface 651 of the coating layer 65 of the bead core 60 and the bead base 121 is made uniform over the entire tire widthwise region corresponding to the tire radially inner side surface 651 of the coating layer 65 toward the tire widthwise inside.

The third modification of FIG. 6A and FIG. 6B is capable of making the fitting force between the bead portion 12 and the rim R substantially uniform along the tire width direction likewise the example of FIG. 2A and FIG. 2B. This makes it possible to improve the fitting force between the bead portion 12 and the rim R.

Besides the above-described examples, in the vulcanizing step, the first distance L1 may be made uniform or gradually reduced only in a part of the tire widthwise region toward the tire widthwise inside. The pneumatic tire 1 may be configured to make the second distance L2 uniform or gradually reduced only in the part of the tire widthwise region toward the tire widthwise inside. In such a case, it is possible to enhance the fitting force between the bead portion 12 of the tire 1 and the rim R to be higher than the conventional case.

Likewise the examples as described above, in this case, in the vulcanizing step, it is preferable to make the first distance L1 uniform or gradually reduced in at least the tire widthwise region across the tire widthwise center CCP of the bead core 60 toward the tire widthwise inside. Likewise the above described examples, it is preferable to make the second distance L2 of the manufactured pneumatic tire 1 uniform or gradually reduced in at least the tire widthwise region across the tire widthwise center CCP of the bead core toward the tire widthwise inside.

The "tire widthwise center CCP of the bead core 60" refers to a tire widthwise position midway between the innermost end and the outermost end of the bead core 60 in the tire width direction in the tire widthwise cross section.

This allows the fitting force between the bead portion 12 of the tire 1 and the rim R at the tire widthwise inside of the bead core 60 to be equal to or higher than the fitting force at the tire widthwise outside of the bead core 60. Furthermore, the entire fitting force may be effectively improved.

As described in the examples of FIG. 2A, FIG. 4A, FIG. 5A, FIG. 6A, preferably, in the vulcanizing step, the minimum value of the first distance L1 at the tire widthwise inside of the bead core 60 to the tire widthwise center CCP is equal to (corresponding to the examples of FIG. 2A, FIG. 5A, FIG. 6A) or shorter than (corresponding to the example of FIG. 4A) the minimum value of the first distance L1 at the tire widthwise outside of the bead core 60 to the tire widthwise center CCP.

Similarly, in the case of the manufactured pneumatic tire 1, preferably, the minimum value of the second distance L2 at the tire widthwise inside of the bead core 60 to the tire widthwise center CCP is equal to (corresponding to the examples of FIG. 2B, FIG. 5B, FIG. 6B), or shorter than (corresponding to the example of FIG. 4B) the minimum value of the second distance L2 at the tire widthwise outside of the bead core 60 to the tire widthwise center CCP.

This allows the fitting force between the bead portion 12 of the tire 1 and the rim R at the tire widthwise inside of the bead core 60 to be equal to or higher than the fitting force at the tire widthwise outside of the bead core 60. Furthermore, the entire fitting force may be effectively improved.

A preferred example of the bead core manufacturing step of manufacturing the bead core 60 will be described in detail referring to FIG. 7A and FIG. 7B. The bead core manufacturing step in this example is executed for manufacturing the core-and-filler member 50 illustrated in FIG. 2A and FIG. 2B. In the present disclosure, the bead core 60 may be manufactured by executing the bead core manufacturing step that is different from the present example.

The bead core manufacturing step in the present example includes an annular body forming step, an injection molding step, and a cooling step. FIG. 7A illustrates a behavior of the injection molding step, and FIG. 7B illustrates the core-and-filler member 50 obtained by a bead core manufacturing step.

Although depiction is omitted, in the annular body forming step, an annular body 61 is formed by winding a strip member 64 formed by coating one or more bead wires 62a with a coating resin 63. The annular body 61 illustrated in FIG. 7A is formed, for example, by spirally winding the strip member 64 formed by coating one or more (three in an illustrated example) bead wires 62a with the coating resin 63, and the strip member 64 almost rectangular in an axial cross section of the annular body 61 is laminated in three stacks in a radial direction of the annular body 61. Here, "the axial direction of the annular body 61" indicates a direction parallel to a central axis of an almost annular shape (a spiral shape) formed by the annular body 61. In this example, the number of the bead wires 62a arranged in the axial direction of the annular body 61 is three, but this case is not especially restrictive, and the number of the bead wires 62a may be one or more.

According to the present example, in the annular body forming step, an outer peripheral side of the bead wire 62a is coated with the molten coating resin 63, and cooled to solidify, thereby forming the strip member 64. A cross-sectional shape of the strip member 64 (the shape of a cross section orthogonal to an extending direction of the bead wire 62a) is almost rectangular in the present example, but is not limited to this example, and can be any other shape such as an almost parallelogram. The cross-sectional shape of the strip member 64 can be formed in a desired shape, for example, by use of an extruder. Furthermore, the annular body 61 can be formed by winding and stacking the strip member 64. Stacks are joined to each other, for example, by winding the strip member 64 while melting the coating resin 63 through hot plate welding or the like, and solidifying the molten coating resin 63. Alternatively, the stacks can be joined to each other by bonding with an adhesive or the like.

Subsequently to the annular body forming step, in the injection molding step, the annular body 61 formed in the annular body forming step is coated with a resin material, thereby forming the coating layer 65, and the bead filler 70 integral with the coating layer 65. Specifically, as illustrated in FIG. 7A, the annular body 61 formed in the above annular body forming step is disposed in a cavity C300 of an injection mold 300, and the heated and molten injection resin is injected from a gate (not illustrated) into the cavity C300. During this injection, the annular body 61 may be fixed to a predetermined position in the cavity C300 with a jig that is not illustrated.

In the present example, the injection mold 300 has an inner surface that forms a molding surface 320 configured to mold an outer surface of the core-and-filler member 50. More specifically, the injection mold 300 comprises a plurality of injection mold portions 310 and 311, and the respective injection mold portions 310 and 311 have inner surfaces that form parts of the molding surface 320, respectively. The molding surface 320 of the injection mold 300 comprises a coating layer molding surface 321 configured to mold an outer surface of the coating layer 65 of the bead core 60, and a filler molding surface 322 configured to mold an outer surface of the bead filler 70.

Subsequently to the injection molding step, in the cooling step, the coating layer 65 and the bead filler 70 are cooled to solidify. After the cooling step, the completed core-and-filler member 50 is removed from the injection mold 300. As illustrated in FIG. 7B, in the bead core 60 of the core-and-filler member 50, the annular body 61 has a configuration where the annular body 61 has a circumference coated with the solidified coating layer 65. Furthermore, the bead filler 70 is formed integrally with the coating layer 65 on a radially outer side of the coating layer 65.

According to the manufacturing method of the bead core of the present example, the stacked annular body 61 receives a force of thermal contraction generated by the coating layer 65 injected to the circumference of the annular body in the above cooling step. Consequently, the annular body 61 can be fastened with the surrounding coating layer 65. Then, the bead core 60 has a configuration where the circumference of the annular body 61 is coated with the solidified coating layer 65. Consequently, the solidified surrounding coating layer 65 can protect the annular body 61 against an external force such as a lateral force of the tire, and additionally, the annular body 61 can be fastened with the surrounding solidified coating layer 65, to inhibit collapse of the shape of the annular body 61. Therefore, the bead core 60 having a high durability is obtainable.

Furthermore, in the present example, the bead filler 70 is formed together with the coating layer 65. Consequently, it is not necessary to separately provide the manufacturing step of the bead filler 70. Additionally, also in the assembling molding step of assembling the bead filler with the other tire forming members, the bead core 60 and the bead filler 70 can be treated as one part, and a manufacturing property can improve.

As described above, the bead filler 70 does not have to be manufactured in the bead core manufacturing step. In this case, the injection mold 300 used for the injection molding step may be structured by excluding the filler molding surface 322. In this case, the bead filler 70 comprising the resin material is manufactured by executing an additional injection molding step. The resultant bead filler may be bonded to the coating layer 65 of the bead core 60 through welding or adhesion.

Note that from a viewpoint of more easily obtaining the bead core 60 having a high durability, it is preferable that the coating layer 65 comprises the same resin material as the coating resin 63. The reason is that the coating layer 65 and the coating resin 63 are easy to be welded or bonded.

On the other hand, from a viewpoint of easily adjusting a hardness of the bead core 60, it is preferable that the coating layer 65 comprises the resin material different from the coating resin 63. Here, as described above, "the resin material" described herein has a larger hardness than the rubber 40. Consequently, to decrease a difference in rigidity between the bead core 60 and the surrounding rubber 40, it is preferable that the coating layer 65 directly adjacent to the rubber 40 has a smaller hardness than the coating resin 63 (the hardness is close to that of the rubber 40).

Additionally, to further obtain an effect of the thermal contraction, it is preferable that the coating layer 65 has a larger hardness than the coating resin 63.

Alternatively, in the coating layer 65, it is preferable to use a resin material having a high adhesiveness to the rubber 40.

### INDUSTRIAL APPLICABILITY

A manufacturing method of a pneumatic tire according to the present disclosure and the pneumatic tire can be utilized in any type of pneumatic tire such as a passenger vehicle pneumatic tire.

### REFERENCE SIGNS LIST

- 1': unvulcanized tire (the tire)
- 1: pneumatic tire (the tire)
- 10' and 10: tread
- 11' and 11: sidewall portion
- 12' and 12: bead portion
- 20: carcass
- 20a: main body
- 20b: turn-up portion
- 30: belt
- 40': unvulcanized rubber
- 40: rubber
- 50: core-and-filler member
- 60: bead core
- 61: annular body
- 62a: bead wire
- 62: bead wire bundle
- 63: coating resin
- 64: strip member
- 65: coating layer
- 65a,: 65b corner portion
- 70: bead filler
- 121: bead base
- 200: vulcanization mold
- 210, 211, and 212: vulcanization mold portion
- 220: tire outer surface molding surface
- 221: bead base molding surface
- 230: bladder
- 300: injection mold
- 310 and 311: injection mold portion
- 320: molding surface
- 321: coating layer molding surface
- 322: filler molding surface
- 651: tire radially inner side surface of the coating layer
- C200 and C300: cavity
- CCP: tire widthwise center of the bead core
- CL: tire equatorial plane
- L1: distance in a tire radial direction (first distance)
- L2: distance in a tire radial direction (second distance)
- R: rim
- Rbs: bead sheet

## Claims

1. A manufacturing method of a pneumatic tire, including a vulcanizing step of vulcanizing an unvulcanized tire in a vulcanization mold, wherein:
a bead core of the unvulcanized tire includes a bead wire bundle and a coating layer formed of a resin material for surrounding a circumference of the bead wire bundle when seen in a tire widthwise cross section; and
in the vulcanizing step, a distance in a tire radial direction between a tire radially inner side surface of the coating layer of the bead core and a bead base molding surface of the vulcanization mold is made uniform or gradually reduced in at least a part of a tire widthwise region toward a tire widthwise inside.

2. The manufacturing method of the pneumatic tire according to claim 1, wherein in the vulcanizing step, a minimum value of the distance in the tire radial direction at the tire widthwise inside to a tire widthwise center of the bead core is equal to or shorter than a minimum value of the distance in the tire radial direction at a tire widthwise outside to the tire widthwise center of the bead core.

3. The manufacturing method of the pneumatic tire according to claim 1 or 2, wherein in the vulcanizing step, the tire radially inner side surface of the coating layer of the bead core, and the bead base molding surface of the vulcanization mold gradually extend inwardly in the tire radial direction toward the tire widthwise inside.

4. The manufacturing method of the pneumatic tire according to claim 3, wherein the bead core of the unvulcanized tire has a rounded or a chamfered corner portion at inner sides of the coating layer in the tire width direction and the tire radial direction when seen in the tire widthwise cross section.

5. A pneumatic tire in which a bead core includes a bead wire bundle and a coating layer formed of a resin material for surrounding a circumference of the bead wire bundle when seen in the tire widthwise cross section, wherein a distance in a tire radial direction between a tire radially inner side surface of the coating layer of the bead core and a bead base is made uniform or gradually reduced in at least a part of a tire widthwise region toward a tire widthwise inside.

6. The pneumatic tire according to claim 5, wherein a minimum value of the distance in the tire radial direction at the tire widthwise inside to a tire widthwise center of the bead core is equal to or shorter than a minimum value of the distance in the tire radial direction at a tire widthwise outside to the tire widthwise center of the bead core.

7. The pneumatic tire according to claim 5 or 6, wherein a tire radially inner side surface of the coating layer of the bead core, and the bead base gradually extend inwardly in the tire radial direction toward the tire widthwise inside.

8. The pneumatic tire according to claim 7, wherein the bead core has a rounded or a chamfered corner portion at inner sides of the coating layer in the tire width direction and the tire radial direction when seen in the tire widthwise cross section.
